# FASCICULE DE BREVET EUROPEEN

(11) **EP 0 920 777 B1**
(45) Date de publication et mention de la délivrance du brevet: **26.11.2003**
(21) Numéro de dépôt: 97937639.9
(22) Date de dépôt: 19.08.1997
(51) Int. Cl.: H04N 7/167

(54) **PROCEDE ET EQUIPEMENT POUR AFFECTER A UN PROGRAMME DE TELEVISION DEJA EN ACCES CONDITIONNEL UN ACCES CONDITIONNEL COMPLEMENTAIRE**
VERFAHREN UND VORRICHTUNG ZUR ZUWEISUNG VON KOMPLEMENTÄREN ZUGANGSBEDINGUNGEN FÜR EIN FERNSEHPROGRAMM MIT BEDINGTEM ZUGANG
METHOD AND EQUIPMENT FOR ALLOCATING TO A TELEVISION PROGRAMME ALREADY CONDITIONALLY ACCESSED A COMPLEMENTARY CONDITIONAL ACCESS

(30) Priorité: 20.08.1996 FR 9610302
(43) Date de publication de la demande: 09.06.1999
(73) Titulaire: FRANCE TELECOM, 75015 Paris (FR); TELEDIFFUSION DE FRANCE, 75732 Paris Cédex 15 (FR)
(72) Inventeur: VIGARIE, Jean-Pierre, F-35510 Cesson Sévigné (FR)
(74) Mandataire: Audier, Philippe André
(86) Numéro de dépôt international: FR9701502
(87) Numéro de publication internationale: WO98008341

(56) Documents cités:
- EP-A- 0 461 029
- WO-A-94/10802
- ANGEBAUD D ET AL: "CONDITIONAL ACCESS MECHANISMS FOR ALL-DIGITAL BROADCAST SIGNALS" IEEE TRANSACTIONS ON CONSUMER ELECTRONICS, vol. 38, no. 3, 1 août 1992, NEW YORK, NY, US, pages 188-194, XP000311835
- VIGARIE J P: "A DEVICE FOR REAL-TIME MODIFICATION OF ACCESS CONDITIONS IN A D2-MAC/PACKET EUROCRYPT SIGNAL: THE TRANSCONTROLLER" CABLE TV SESSIONS, MONTREUX, JUNE 10 - 15, 1993, no. SYMP. 18, 11 juin 1993, POSTES;TELEPHONES ET TELEGRAPHES SUISSES, pages 761-769, XP000379391

## Description

### Domaine technique

La présente invention a pour objet un procédé et un équipement pour affecter à un programme de télévision déjà en accès conditionnel un accès conditionnel complémentaire.

Les nouveaux systèmes de télévision s'accompagnent de la mise en oeuvre de plusieurs systèmes d'accès conditionnel. Le terme "télévision" est pris dans un sens large incluant des programmes de radiodiffusion ou de diffusion de données. Dans la suite, on désignera par "système de télévision", les aspects techniques du signal de télévision : modes de codage des images, des sons et des données, descriptions des services, syntaxe détaillée du signal, paramètres de modulation, ... On désignera par "système d'accès conditionnel" l'ensemble des fonctionnalités affectant un signal de télévision pour en exprimer les modes de commercialisation : modalités d'embrouillage, fonctions et syntaxe des messageries relatives aux modes de commercialisation des programmes, ...

L'utilisation des techniques numériques pour constituer un signal de télévision , soit en totalité (comme dans la norme MPEG2/DVB), soit en partie (comme dans le multiplex paquet du D2-MAC/Paquet), permet une grande souplesse quant au choix d'un système d'acces conditionnel. En particulier, faire coexister plusieurs systèmes d'accès conditionnel dans un même signal est désormais possible, et fait même partie des fonctionnalités importantes à prendre en compte dans la définition d'un nouveau système de télévision.

Ce besoin provient de ce que le système d'accès conditionnel est primordial pour un opérateur dans ses choix de commercialisation des programmes, puisqu'un tel système doit lui permettre d'exprimer sa stratégie commerciale (abonnement, payer-pour-voir (ou "pay per view" )...) et s'accompagne de tout un environnement technique (gestion commerciale des usagers, guide électronique des programmes, parc de terminaux, ...) lui garantissant le contrôle de l'exclusivité de sa clientèle. Un signal devenant multiservice devient, par là même, multi-système d'accès conditionnel.

Le cas le plus général d'application de l'accès conditionnel à un système de télévision concerne l'affectation d'un système d'accès conditionnel à chaque service transporté dans un signal. Déjà mis en oeuvre implicitement dans les systèmes analogiques monoservices (systèmes DISCRET, SYSTER, VIDEOCRYPT, CRYPTOVISION, ... en NTSC, PAL ou SECAM), ce procédé se généralise aux systèmes numériques multiservices : dans la norme MPEG2/DVB, ce procédé est appelé MULTICRYPT. S'il permet, dans un même signal l'indépendance des opérateurs responsables des différents services, un tel procédé devient contraignant pour l'usager qui, pour accéder à la pluralité des programmes, doit multiplier les décodeurs ou disposer de modules d'accès conditionnel multiples enfichables à la demande dans un terminal plus général : c'est ainsi que la norme MPEG2/DVB a défini un algorithme d'embrouillage commun et a défini et détaillé le concept d'une interface commune d'accès conditionnel pour les terminaux.

La mise en oeuvre d'un procédé tel que MULTICRYPT est assurée lors de la fonction de codage d'un signal de télévision combinant codeur, multiplexeur, embrouilleur, moyen d'insertion de données d'accès conditionnel.

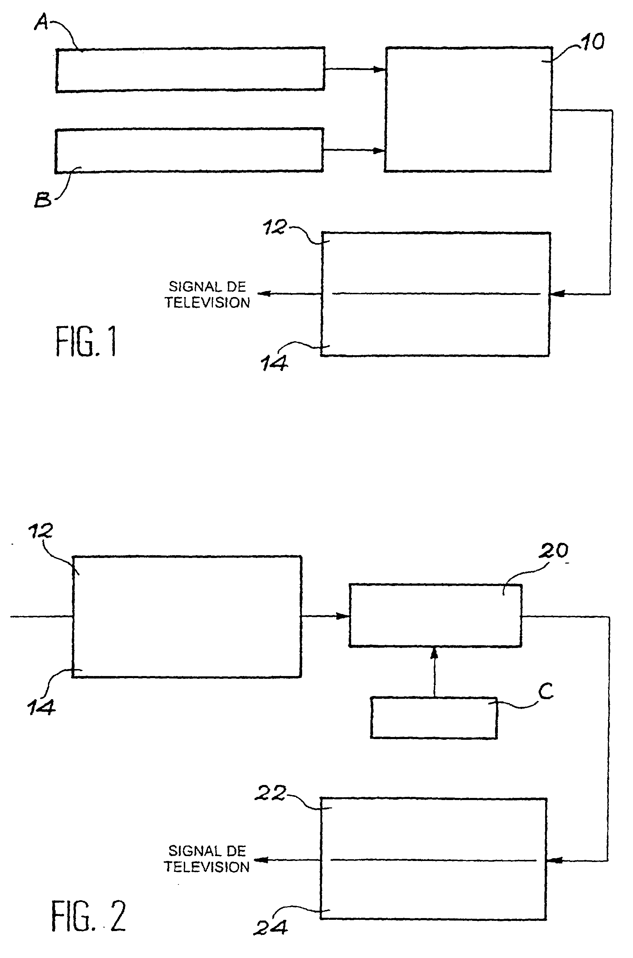

La figure 1 annexée illustre ce procédé. On y voit, schématiquement, un opérateur A fournissant un service constitué des composantes 1 et le commercialisant selon des modalités 1 et un opérateur B fournissant un service constitué des composantes 2 et le commercialisant selon des modalités 2. La commercialisation de ces composantes est appliquée dans un équipement 10, qui est un codeur/embrouilleur/multiplexeur. Les blocs 12 et 14 schématisent les programmes 1 et 2 avec leurs conditions d'accès conditionnel propres aux opérateurs A et B. Le signal de télévision qui en résulte est du type MULTICRYPT.

Cette mise en oeuvre peut être également assurée ou complétée par une fonction de transcontrôle modifiant au niveau de l'accès conditionnel un signal déjà constitué. C'est ce qui est illustré sur la figure 2 annexée. Le signal de télévision composé des programmes 1, 2 avec leurs systèmes d'accès conditionnel respectifs A et B schématisés par les blocs 12 et 14, est introduit dans un transcontrôleur 20 commandé par un opérateur C. Ce circuit supprime les conditions d'accès A et B respectives des programmes 1 et 2 et les remplace par de nouvelles conditions d'accès C. Il en résulte deux nouveaux programmes avec un système d'accès conditionnel C, respectivement schématisés par les blocs 22 et 24.

Un transcontrôleur est décrit, par exemple, dans les documents EP-A-0 461 029 et EP-A-0 666 694.

Un autre procédé peut être mis en oeuvre, qui permet l'accès à un même programme à diverses populations commerciales (c'est-à-dire à divers terminaux) sous réserve que les divers opérateurs concernés soient convenus d'un accord pour le partage d'un tel service. Déjà mis en oeuvre en D2-MAC/Paquet et appelé SIMULCRYPT dans le système MPEG2/DVB, ce procédé consiste à associer à un même programme plusieurs systèmes d'accès conditionnel différents, chacun de ces systèmes étant sous la responsabilité d'un opérateur et permettant à chacun de définir sa propre commercialisation du même programme. Bien que cette appellation concerne, stricto sensu, l'application de ce procédé au MPEG2/DVB, c'est par simplification que cette association de plusieurs systèmes d'accès conditionnel à un même programme sera dénommée "SIMULCRYPT" dans le présent document, quel que soit le système de télévision support visé.

La mise en oeuvre d'un procédé tel que SIMULCRYPT est assurée habituellement lors de la fonction de codage d'un signal de télévision. La présente invention a pour objet un procédé et un équipement permettant d'affecter à un programme déjà commercialisé selon un premier système d'accès conditionnel des données décrivant sa commercialisation selon un autre système d'accès conditionnel. Tout en étant adaptable à divers systèmes de télévision et divers systèmes d'accès conditionnel, cet équipement sera appelé dans la suite "SIMULCRYPTEUR", par référence au procédé SIMULCRYPT défini dans la norme MPEG2/DVB.

### Etat de la technique antérieure

Dans un signal de télévision, un programme associé à un système d'accès conditionnel fait appel à plusieurs entités :
- **les composantes :** il s'agit des flux d'informations représentant les images, les sons, les données de télétexte, etc... ; l'ensemble de ces composantes constitue l'aspect technique du programme et matérialise le contenu audiovisuel même ; les composantes sont, le cas échéant, embrouillées, indépendamment les unes des autres .
- **la messagerie de contrôle des titres d'accès** : il s'agit d'un ensemble de messages appelés communément ECM ("Entitlement Control Messages") ; cette messagerie est constituée de données exprimant les conditions courantes de commercialisation du service auquel elle est associée et appelées "conditions d'accès" ; de ce fait, elle opére le plus souvent en temps réel, du fait de sa synchronisation avec le programme en cours, en payer-pour-voir ("pay per view") notamment ; les données de cette messagerie sont comparées en permanence aux droits déjà acquis par l'usager du terminal, une comparaison positive déclenchant l'accès au programme par le désembrouillage des composantes choisies ; la messagerie ECM transporte également des paramètres (ou leur référence) qui particularisent le fonctionnement des algorithmes d'embrouillage et de désembrouillage, paramètres communément appelés "mot de contrôle" (en abrégé CW pour "Control Word").
- **la messagerie de gestion des titres d'accès :** il s'agit d'un ensemble de messages appelés communément EMM ("Entitlement Management Messages") ; cette messagerie est constituée de données assurant la gestion des droits acquis par l'usager ; elle permet principalement l'inscription des droits achetés par l'usager (abonnements, unités de crédit, ...), au niveau de son terminal (ou du processeur de sécurité associé) ; hormis le fait que l'inscription d'un droit doit être effective avant que le besoin de ce droit ne se manifeste (comparaison aux ECM), cette messagerie ne nécessite pas une synchronisation fine avec le programme, le lien EMM/programme étant plus logique qu'opérationnel.
- **les liens composantes/conditions d'accès** : chaque composante d'un programme peut être commercialisée selon des modalités particulières, voire laissée en clair ; de même, plusieurs composantes peuvent être commercialisées de la même façon, c'est-à-dire se partager une même condition d'accès ; ces liens composantes/conditions d'accès n'étant pas définis à l'avance, étant laissés à l'appréciation de l'opérateur de programme et étant de surcroît dynamiques, ils nécessitent d'être décrits en permanence dans le signal : ils permettent ainsi au terminal de retrouver les conditions d'accès associées aux composantes qu'il doit restituer ; ils sont décrits dans un ensemble de données dites "d'identification des services".
- **l'interface usager dans le terminal :** couvrant un domaine plus large que le seul accès conditionnel, l'interface usager concerne ici d'une part les dialogues concernant l'achat des programmes ("pay per view", consultation des droits déjà acquis, ...), et d'autre part la présentation de l'offre de programme, communément appelée "EPG" ("Electronic Program Guide"), qui décrit notamment les conditions de commercialisation des programmes à venir ; l'interface usager fait intervenir des données véhiculées dans le signal, informations de "contenu" extraites des ECM ou spécifiques à l'offre de programme, complétées éventuellement de données décrivant les modes de présentation (téléchargement de l'interface homme/machine).

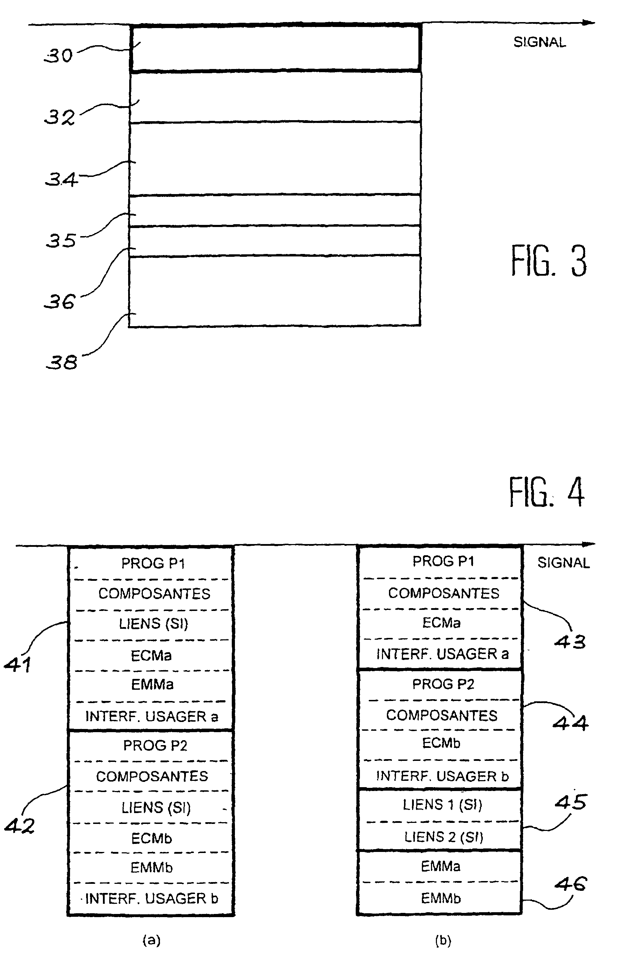

Ces diverses entités peuvent donner lieu à une représentation générale telle que celle de la figure 3 annexée. Pour un programme 30, on trouve les composantes 32, l'idèntification des services 34, les conditions d'accès 35, la gestion des droits 36, l'interface usager 38. Les données 34 sont dues à la mise en oeuvre de l'accès conditionnel et les données 35, 36, 38 sont spécifiques du système d'accès conditionnel utilisé.

Selon les systèmes de télévision et d'accès conditionnel utilisés, certaines de ces entités peuvent être implicites, telles que l'identification des services en SECAM, ou absentes, telles que les données d'interface usager (modalités de présentation natives dans le terminal). En outre, ce modèle ne préjuge pas du codage de ces entités (vidéo analogique en D2-MAC/Paquet ou numérique en MPEG2/DVB, offre de programmes par télétexte en D2-MAC/Paquet ou en "tables SI EIT" en MPEG2/DVB).

Si plusieurs programmes coexistent dans le même signal et font appel à divers systèmes d'accès conditionnel (cas du "MULTICRYPT" en MPEG2/DVB), la représentation générale est alors celle de la figure 4, qui peut prendre deux formes (a) ou (b) :
- le cas "a" est l'application directe du modèle à la coexistence de deux programmes dans un même signal : le programme P1 est associé au système d'accès conditionnel "a", (bloc 41), le programme P2 au système d'accès conditionnel "b" (bloc 42) ;
- le cas "b" est fonctionnellement identique au précédent. Cependant, les liens propres aux deux programmes P1 (bloc 43), P2 (bloc 44) sont regroupés dans un bloc d'identification des services commun à l'ensemble du signal ; en outre, un service complémentaire 46 est créé qui fédère les flux EMM (EMMa et EMMb), tous systèmes d'accès conditionnel confondus ; ce cas "b" correspond à un cas plus réaliste tel que celui du MPEG2/DVB.

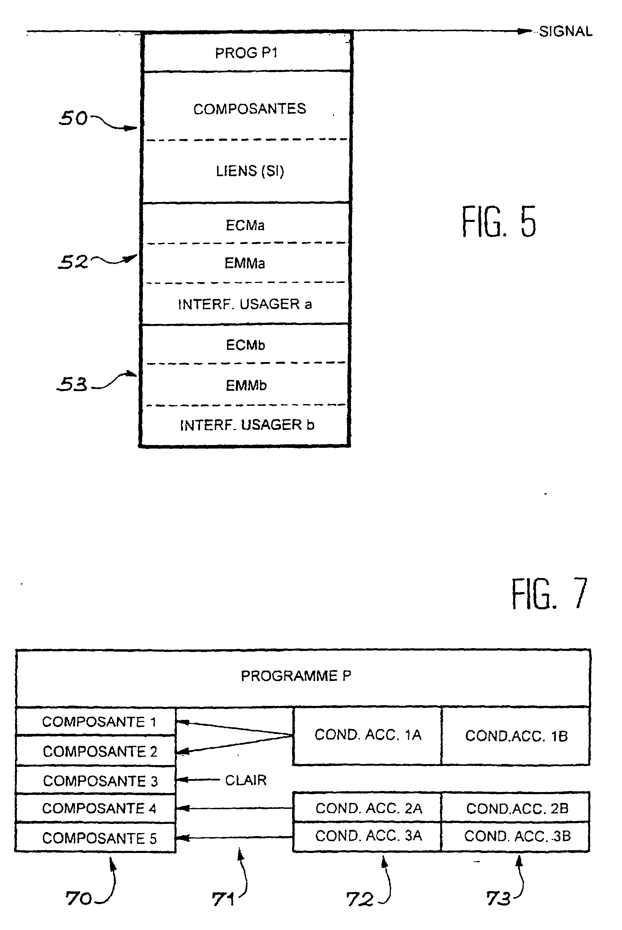

L'application de ce modèle à un programme en SIMULCRYPT conduit à la représentation de la figure 5 (le signal peut transporter d'autres programmes non représentés). Sur cette figure, le programme P1 comprend des composantes et des données de liens 50 dues à la mise en oeuvre de l'accès conditionnel, des données 52 spécifiques du système d'accès conditionnel a, et des données 53 spécifiques du système d'accès conditionnel b.

Un tel signal présente deux particularités majeures :
- chaque composante constituant le programme n'existe qu'à un seul exemplaire, même si elle est embrouillée,
- l'organisation entre composantes et conditions d'accès, identifiée par les liens, est unique pour ce programme,
et ce, malgré la coexistence de plusieurs systèmes d'accès conditionnel.

L'embrouillage d'une composante, ou d'un groupe de composantes se partageant la même condition d'accès, est particularisé par un mot de contrôle CW qui paramètre le comportement de l'embrouilleur et du désembrouilleur. Il est donc nécessaire que la messagerie ECM de chaque système d'accès conditionnel fasse référence aux mêmes mots de contrôle, de façon synchronisée.

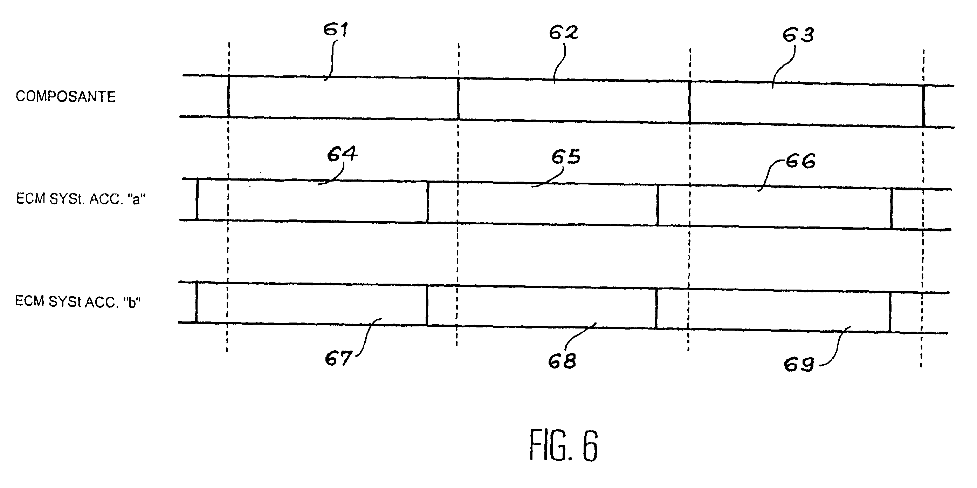

C'est ce qui est représenté sur la figure 6 où l'on voit :
- sur la première ligne, la succession des opérations d'embrouillage : 61 avec un mot CWi, 62 avec un mot CWj, 63 avec un mot CWk, ...
- sur la deuxième ligne, la succession des ECM du système d'accès a, respectivement 64, 65, 66,
- sur la troisième ligne, la succession des ECM du système d'accès b, respectivement 67, 68, 69.

Les liens composantes/conditions d'accès définissent quelles sont les composantes en clair ou embrouillées, et comment elles se répartissent parmi les conditions d'accès. Cette organisation est la même pour tous les systèmes d'accès conditionnel du programme. Tous les opérateurs doivent construire leur commercialisation sur la même organisation du programme : ceci interdit, par exemple, qu'un programme de télévison soit commercialisé simultanément par un opérateur selon l'organisation : image accessible en abonnement, son en clair, sous-titre en clair, par un autre opérateur selon l'organisation : image et son accessibles en abonnement, sous-titre en clair, par un troisième selon l'organisation : image et son accessibles en abonnement, sous-titre en "pay per view".

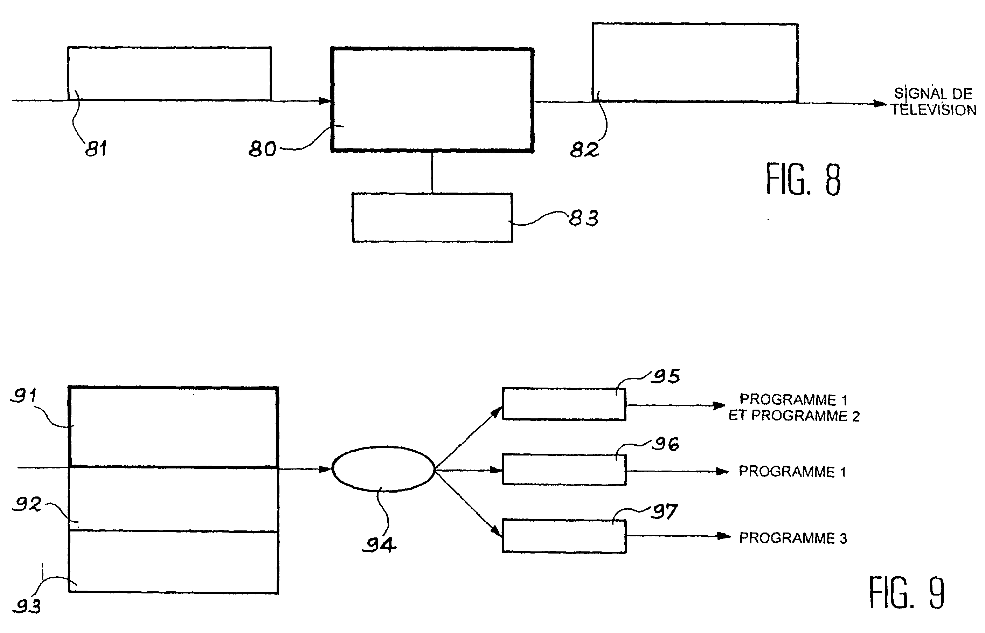

Cette organisation commune est schématisée sur la figure 7, où l'on voit un programme P possédant :
- des composantes 70,
- des liens 71,
- des premières conditions d'accès conditionnel A, référencées 72,
- des secondes conditions d'accès conditionnel B, référencées 73.

Les composantes 70 et les liens 71 sont imposés à tous les opérateurs. Le système d'accès conditionnel 72 est défini par l'opérateur A et le système d'accès conditionnel 73 est défini par l'opérateur B.

Ces deux particularités -unicité des mots de contrôle et unicité des relations composantes/conditions d'accès- créent des liens très étroits entre les opérateurs se partageant en SIMULCRYPT un même programme. L'analyse du rôle des opérateurs impliqués fait apparaître une dissymétrie qui peut être contraignante pour certains.

En effet, l'un des opérateurs appelé "opérateur-maître", est le fournisseur du programme matérialisé par ses composantes. En contrôlant la source, il contrôle la première commercialisation du programme. Il impose ainsi les mots de contrôle utilisés et les relations composantes/conditions d'accès. Il peut commercialiser les composantes de manière groupée ou séparée, laisser certaines composantes en clair, ... Le contrôle total de la source lui permet en outre de synchroniser l'évolution de sa commercialisation à l'enchainement des programmes : périodes en clair, changement du coût d'une émission, ...

Les autres opérateurs, appelés "opérateurs-secondaires", doivent se plier à l'utilisation des mots de contrôle utilisés par l'opérateur-maître. En outre, ils doivent calquer leur commercialisation des composantes sur celle qui a été définie par l'opérateur-maitre. Enfin, ne contrôlant pas directement la programmation des émissions, ces opérateurs-secondaires se heurtent au problème de la synchronisation avec les changements de programmes.

Jusqu'à présent, la mise en oeuvre du SIMULCRYPT s'effectuait au niveau du point de codage de l'opérateur-maître auquel accèdent les opérateurs secondaires. Ceci nécessite diverses conditions :
- une architecture du point de codage adaptée au SIMULCRYPT : en particulier, cette architecture doit comprendre une distribution interne des mots de contrôle, disposer d'entrées de données d'accès conditionnel multiples (plusieurs flux de données ECM ou EMM ...), et proposer des mécanismes de synchronisation aux opérateurs ;
- la localisation des générateurs de messagerie ECM chez l'opérateur-maître, afin de disposer des mots de contrôle (ceux-ci peuvent difficilement être déportés en raison de leur rôle stratégique et des risques de piratage) : de tels générateurs peuvent disposer de secrets propres à chaque opérateur ;
- un accès de type commande/contrôle pour chaque opérateur pour définir les conditions d'accès pour sa propre commercialisation : cet accès, s'il est confié à l'opérateur-maître, peut optimiser la synchronisation commercialisation des programmes/enchaînement des programmes ; cet accès peut aussi imposer la présence des opérateurs-secondaires dans les locaux de l'opérateur-maitre ;
- une constitution centralisée du signal véhiculant un programme commercialisé par plusieurs opérateurs : cette organisation fonctionnelle est mal adaptée au cas de "survente" dans des réseaux câblés indépendants d'un programme reçu par satellite.

On comprend que ces relations très étroites, où l'opérateur-maître garde un rôle prédominant, puissent gêner des opérateurs-secondaires, placés dans une position "d'asservis", d'autant plus difficile à supporter qu'elle touche la stratégie commerciale et concurrentielle de chacun.

La présente invention a justement pour but d'éviter cet inconvénient, en atténuant cet assujettissement des opérateurs-secondaires.

### Exposé de l'invention

Pour limiter les relations de dépendance entre opérateur-maître et opérateurs-secondaires, on dissocie la constitution d'un programme et son passage en SIMULCRYPT. De par la nature même du SIMULCRYPT, le rôle prépondérant de l'opérateur-maître ne peut pas être supprimé puisque ce dernier maîtrise la source du programme, mais cette prépondérance peut être atténuée par l'usage d'un équipement autonome permettant à un opérateur-secondaire d'appliquer son SIMULCRYPT : la relation de dépendance entre opérateur-maître et opérateur-secondaire est alors réduite à l'achat du programme du premier par le second, situation analogue à celle que l'on rencontre dans la mise en oeuvre de l'opération dite de transcontrôle.

De façon précise, la présente invention a pour objet un procédé pour affecter à un programme de télévision déjà en accès conditionnel, un accès conditionnel complémentaire, ce programme de télévision comprenant initialement :
- des composantes vidéo et/ou de son et/ou de données, embrouillées selon un premier système d'accès conditionnel, l'opération d'embrouillage mettant en oeuvre des traitements cryptographiques utilisant des mots de contrôle,
- une messagerie de contrôle de titres d'accès exprimant des conditions de commercialisation du programme,
- une messagerie de gestion des titres d'accès constituée de données assurant la gestion des droits acquis par un usager,
- éventuellement, un ensemble de données identifiant les services offerts et/ou complétant la description de l'offre de programme,
caractérisé par le fait que :
- on reçoit ce programme dans des moyens contenant les droits d'accès correspondant au premier système d'accès conditionnel,
- on restitue les mots de contrôle ayant servi à l'embrouillage,
- à partir de ces mots de contrôle restitués on calcule des messages de contrôle de titres d'accès complémentaires en prenant en compte les conditions du système d'accès conditionnel complémentaire et l'on constitue une messagerie complémentaire de contrôle d'accès,
- on produit une messagerie complémentaire de gestion de titres d'accès propre au système d'accès conditionnel complémentaire et, éventuellement, un ensemble complémentaire identifiant les services offerts dans le système d'accès conditionnel complémentaire,
- on réemet le programme avec ses composantes inchangées, sa messagerie de contrôle de titres d'accès et sa messagerie de gestion des titres d'accès inchangées et le cas échéant, l'ensemble des données du programme de télévision initial identifiant les services offerts et/ou complétant la description d'offre de programme, et on y ajoute la messagerie complémentaire de contrôle de titres d'accès, la messagerie complémentaire de gestion des titres d'accès et, le cas échéant, l'ensemble complémentaire de données propres au système complémentaire d'accès conditionnel

La présente invention a également pour objet un équipement pour la mise en oeuvre de ce procédé.

### Brève description des dessins

- la figure 1, déjà décrite, illustre le procédé MULTICRYPT connu, permettant d'obtenir deux programmes ayant chacun un système d'accès conditionnel ;
- la figure 2, déjà décrite, illustre un procédé de transcontrôle ;
- la figure 3, déjà décrite, illustre la structure d'un programme en accès conditionnel ;
- la figure 4, déjà décrite, montre deux variantes de mise en oeuvre du procédé MULTICRYPT avec deux programmes et deux systèmes d'accès conditionnel ;
- la figure 5, déjà décrite, illustre un exemple de mise en oeuvre du procédé SIMULCRYPT, avec deux systèmes d'accès conditionnel pour un même programme ;
- la figure 6, déjà décrite, illustre la synchronisation entre l'embrouillage et la messagerie de chaque système d'accès conditionnel en SIMULCRYPT ;
- la figure 7, déjà décrite, illustre l'organisation générale d'un programme en SIMULCRYPT et les contraintes imposées aux opérateurs ;
- la figure 8 est un schéma général montrant la place d'un équipement conforme à l'invention (SIMULCRYPTEUR) ;
- la figure 9 illustre un exemple d'utilisation d'un signal de télévision formé par le procédé de l'invention ;
- la figure 10 illustre la fonction remplie par l'équipement de l'invention ;
- la figure 11 montre l'organisation fonctionnelle d'un équipement conforme à l'invention.

### Exposé détaillé d'un mode de réalisation

On voit, sur la figure 8, un équipement 80, appelé SIMULCRYPTEUR, conforme à la présente invention, recevant un programme 81 déjà en accès conditionnel A et délivrant un programme 82 en accès conditionnel A et en accès conditionnel B. Cet accès conditionnel B a été inséré par un opérateur 83.

Le signal finalement obtenu peut être utilisé comme illustré sur la figure 9. Sur cette figure, ce programme noté 1 est référencé 91 et il est associé à d'autres programmes classiques, comme un programme 2 en accès conditionnel A (référencé 92) et un programme 3 en accès conditionnel C (référencé 93). Tous ces programmes sont véhiculés par un réseau 94 et distribués :
- à un abonné 95 disposant des droits d'accès A et pouvant ainsi recevoir le programme 1 et le programme 2,
- à un abonné 96 disposant des droits d'accès B et pouvant ainsi recevoir le programme 1,
- à un abonné 97 disposant des droits d'accès C et pouvant recevoir le programme 3.

L'abonné 96 bénéficie donc du procédé de l'invention, qui lui permet d'accéder au programme 1 alors que ce programme, à l'origine, était uniquement en accès conditionnel A. Grâce à l'invention, ce programme est devenu accessible à l'abonné B par l'ajout du système d'accès conditionnel complémentaire B.

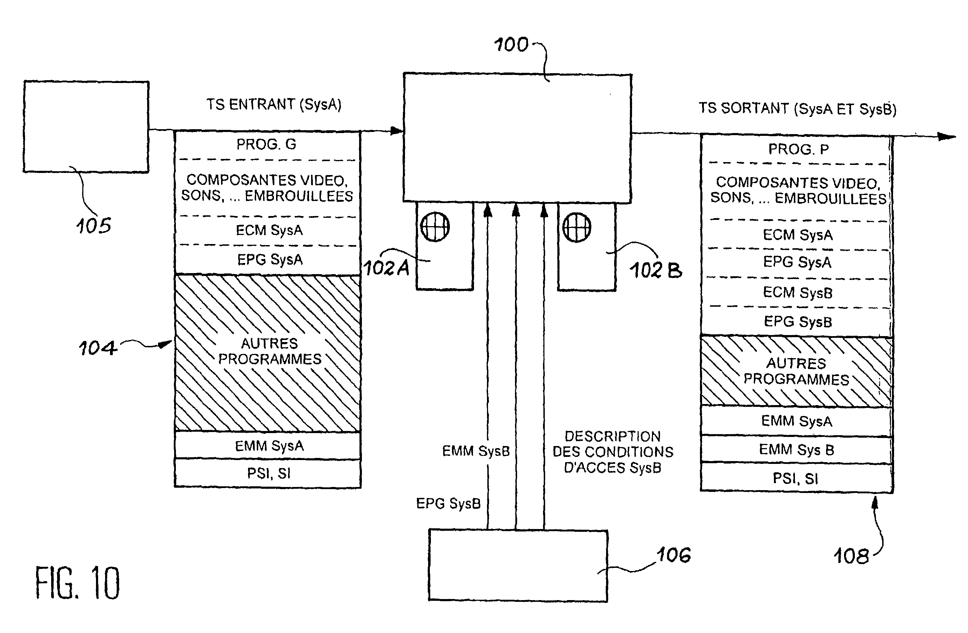

La figure 10 illustre de manière plus détaillée le procédé et l'équipement conforme à l'invention. L'équipement de l'invention, appelé SIMULCRYPTEUR, est référencé 100. Il est équipé d'une carte fille 102A adaptée au système de contrôle d'accès A de l'opérateur amont 105 et d'une carte mère 102B, adaptée à un système de contrôle d'accès B de l'opérateur local 106. Le SIMULCRYPTEUR 100 reçoit un programme dont la structure est décrite par le bloc 104. Ce programme est produit par l'opérateur amont 105, lequel met en oeuvre le système de contrôle d'accès A. Le SIMULCRYPTEUR 100 travaille avec un opérateur local 106, et délivre un programme dont la structure est décrite par le bloc 108.

Les différents signaux mentionnés sur la figure 10 correspondent au contexte MPEG2/DVB. La transposition à d'autres contextes techniques est immédiate pour l'homme du métier. Les abréviations utilisées sur la figure 10 ont la signification suivante :
- TS : "Transport Stream", tel que défini dans la norme MPEG2/DVB, après démodulation et décodage canal pour le signal entrant et avant la modulation et le codage canal pour le signal sortant ; un équipement SIMULCRYPTEUR pourra disposer d'un étage de démodulation et d'un étage de modulation pour s'interfacer avec les réseaux amont et aval, sans que la fonction générale change.
- SysA, SysB : représentent deux systèmes d'accès conditionnel distincts ; ils peuvent représenter le même système d'accès conditionnel, auquel cas ils sont différenciés par une mise en oeuvre spécifique (par exemple : deux crypto-algorithmes différents) ; le premier système, SysA, est lié à l'opérateur amont 105, le second, SysB, est le système complémentaire ajouté au programme et lié à l'opérateur local 106.
- PSI, SI : données d'identification des services ; tables PSI telles que spécifiées par MPEG2 et tables SI telles que spécifiées par DVB.
- EPG : "Electronic Program Guide" ; ensemble de données complétant la description de l'offre de programme (complément ou remplacement des tables SI) ; ces données peuvent inclure la description des présentations à l'usager du terminal.

La carte fille 102A est un processeur de sécurité contenant les droits acquis par l'opérateur local, qui se comporte comme un client de l'opérateur amont ; après comparaison des droits qu'elle possède aux conditions d'accès contenus dans les ECM SysA entrants, la carte fille déclenche les traitements cryptographiques pour restituer chaque mot de contrôle CW.

La carte mère 102B est un processeur de sécurité placé sous le contrôle de l'opérateur local ; elle fournit les traitements cryptographiques intervenant dans l'élaboration des ECM SysB produits localement.

Illustré dans le cas d'un seul programme, ce traitement peut s'appliquer à plusieurs programmes d'un même TS.

Un programme entrant, en accès conditionnel noté SysA, (c'est -à-dire en MULTICRYPT), est complété en SIMULCRYPT par de la messagerie d'accès conditionnel SysB. La messagerie SysA initiale n'est pas modifiée et est restituée telle quelle dans le signal sortant de l'équipement. Le but est l'application complète du principe de SIMULCRYPT pour que le programme continue à être accessible à une population équipée pour SysA et puisse également être accessible à une autre population via le système SysB.

L'application du SIMULCRYPT consiste donc à ajouter au signal toutes les données relatives au système SysB et à l'offre de programmes correspondante : ECM; EMM, signalisations, données privées.

Les éléments du signal concernés par le procédé de l'invention sont :
- les composantes du programme : leurs caractéristiques (codage, contenu, en clair ou embrouillé, association avec des conditions d'accès) restent inchangées ;
- les conditions d'accès ECM : les ECM de SysA associés au programme restent inchangés et correspondent aux choix commerciaux de l'opérateur amont ; le SIMULCRYPTEUR ajoute des ECM de SysB cohérents avec les composantes du programme (même mot de contrôle CW) et les modalités commerciales de l'opérateur local ;
- les EMM : les EMM de SysA véhiculés dans le signal restent inchangés ; le SIMULCRYPTEUR ajoute des EMM SysB définis par l'opérateur local selon sa propre stratégie de gestion de ses clients et générés par une chaîne des droits locale ;
- la signalisation :
   - le contenu des tables PSI (PMT et CAT) doit être adapté pour maintenir l'accès aux données ECM et EMM de SysA et permettre en outre l'accès aux données ECM et EMM du SysB ;
   - le contenu des tables SI est à adapter pour maintenir la description de l'offre de services de l'opérateur amont et pour ajouter la description de l'offre de service de l'opérateur local ; certaines tables concernées directement font référence à l'accès conditionnel (description du coût d'un programme par exemple) ; les autres tables ne sont pas directement concernées par le "simulcryptage" mais peuvent être modifiées dans le cadre de la réorganisation de l'offre de services dont le "simulcryptage" est un élément ;
- les données privées : la mise en oeuvre de SysB peut nécessiter l'insertion locale de données privées (messagerie individuelle, ...).

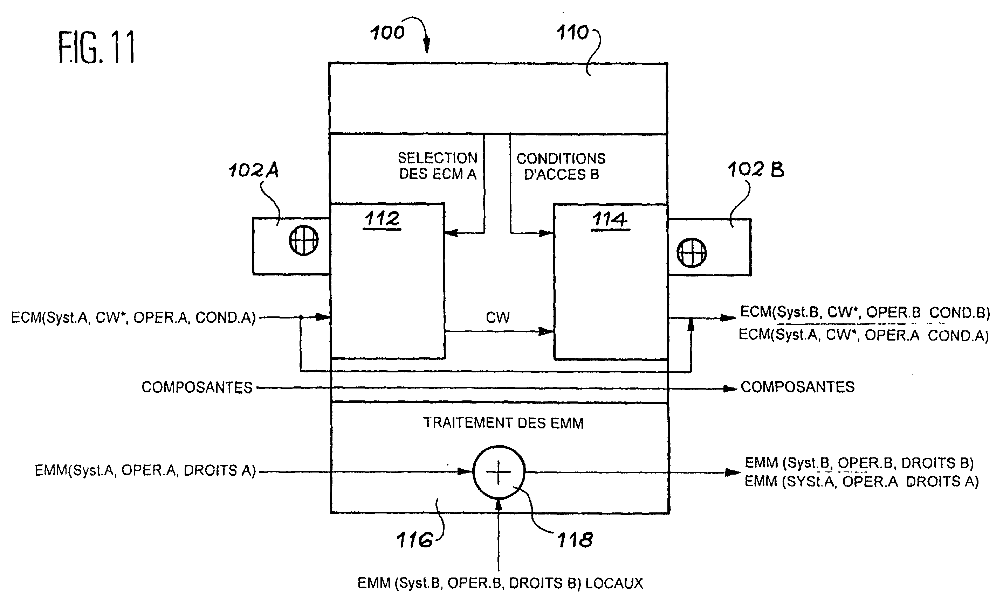

Le traitement des ECM et EMM dans un SIMULCRYPTEUR est illustré sur la figure 11. On y retrouve l'équipement 100, la carte fille 102A, la carte mère 102B. Y apparaissent, en outre, une interface 110 d' opérateur B, un circuit 112 d'extraction et de traitement des ECM de type A, un circuit 114 de génération des ECM de type B, un circuit 116 de traitement des EMM avec une porte OU 118 recevant les EMM locaux.

Ces moyens de traitement des ECM comprennent trois parties :
- sélection des ECM : il s'agit de définir quels services et quelles composantes dans un service sont à traiter ; selon les variantes, ces choix sont implicites (tous les services, l'image et le premier son, ...) ou explicite et faits par l'exploitant sur interprétation des données PSI/SI ;
- traitement des ECM entrants : ces ECM sont extraits et soumis à la carte fille 102 A pour en extraire les mots CW courants ; en cela, l'équipement est un décodeur, client de l'opérateur A ; ces ECM sont par ailleurs dirigés vers la sortie ;
- traitement des ECM sortants : ces ECM sont calculés avec la carte mère 102B de l'opérateur B et prennent en compte les conditions d'accès définis par l'opérateur B et les mots CW courants extraits des ECM entrants ; les ECM sortants sont ajoutés aux ECM entrants .

Le traitement des EMM consiste soit à laisser passer de façon transparente les EMM entrants, soit éliminer ceux-ci et insérer éventuellement des EMM de l'opérateur B. En outre, les EMM entrants sont appliqués à la carte fille pour la gestion des droits de celle-ci. Il en est de même pour d'éventuelles données d'EPG.

Un SIMULCRYPTEUR nécessite des traitements en temps réel de mise à jour de la signalisation (tables PSI/SI) et d'incorporation éventuelle de données privées locales (EPG), à la portée de l'homme du métier.

Cette modification en temps réel de la signalisation est analogue à celle qu'effectue un autre type d'équipement appelé transmodulateur, assurant l'adaptation pour un signal existant de la signalisation lors du passage d'un réseau (satellite par exemple) à un autre (câble par exemple) : extraire les tables, les modifier, insérer leur nouvelle version dans le signal. Si les traitements précis de modification des tables sont différents (action sur le contenu de PMT et de la CAT, ...), les fonctions d'extraction et d'insertion sont comparables.

## Revendications

1. Procédé pour affecter à un programme de télévision déjà en accès conditionnel, un accès conditionnel complémentaire, ce programme de télévision comprenant initialement :
- des composantes vidéo et/ou de son et/ou de données, embrouillées selon un premier système d'accès conditionnel (SysA), l'opération d'embrouillage mettant en oeuvre des traitements cryptographiques utilisant des mots de contrôle (CW),
- une messagerie de contrôle de titres d'accès (ECM SysA) exprimant des conditions de commercialisation du programme,
- une messagerie de gestion des titres d'accès (EMM SysA) constituée de données assurant la gestion des droits acquis par un usager,
- éventuellement, un ensemble de données identifiant les services offerts (PSI, SI) et/ou complétant la description de l'offre de programme (EPG SysA),
**caractérisé par le fait que** :
- on reçoit ce programme dans des moyens contenant les droits d'accès correspondant au premier système d'accès conditionnel (SysA),
- on restitue les mots de contrôle (CW) ayant servi à l'embrouillage,
- à partir de ces mots de contrôle restitués (CW) on calcule des messages de contrôle de titres d'accès complémentaires (ECM SysB) en prenant en compte les conditions du système d'accès conditionnel complémentaire (SysB) et l'on constitue une messagerie complémentaire de contrôle de titres d'accès (ECM SysB),
- on produit une messagerie complémentaire de gestion de titres d'accès (EMM SysB) propre au système d'accès conditionnel complémentaire (SysB) et, éventuellement, un ensemble complémentaire (EPG SysB) identifiant les services offerts dans le système d'accès conditionnel complémentaire (SysB),
- on réemet le programme avec ses composantes inchangées, sa messagerie de contrôle de titres d'accès (ECM SysA) et sa messagerie de gestion des titres d'accès (EMM SysA) inchangées et le cas échéant, l'ensemble des données du programme de télévision initial identifiant les services offerts et/ou complétant la description d'offre de programme (EPG SysA), et on y ajoute la messagerie complémentaire de contrôle de titres d'accès (ECM SysB), la messagerie complémentaire de gestion des titres d'accès (EMM SysB) et, le cas échéant, l'ensemble complémentaire de données (EPG SysB) propres au système complémentaire d'accès conditionnel (SysB).

2. Equipement pour affecter à un programme de télévision déjà en accès conditionnel un accès conditionnel complémentaire selon le procédé de la revendication 1, **caractérisé par le fait qu'**il comprend :
- des moyens (102A) contenant les droits d'accès correspondant au premier système d'accès conditionnel (SysA),
- des moyens (112) aptes à restituer les mots de contrôle (CW) ayant servi à l'embrouillage,
- des moyens (102B, 114) pour calculer, à partir de ces mots de contrôle restitués (CW), des messages complémentaires de contrôle de titres d'accès (ECM SysB) en prenant en compte les conditions du système d'accès conditionnel complémentaire (SysB) et l'on constitue une messagerie complémentaire de contrôle de titres d'accès (ECM SysB),
- des moyens (106) pour produire une messagerie complémentaire de gestion de titres d'accès (EMM SysB) propre au système d'accès conditionnel complémentaire (SysB) et, éventuellement, un ensemble complémentaire (EPG SysB) identifiant les services offerts dans le système d'accès conditionnel complémentaire (SysB),
cet équipement permettant de réémettre le programme avec ses composantes inchangées, sa messagerie de contrôle de titres d'accès (ECM SysA) et sa messagerie de gestion des titres d'accès (EMM SysA) inchangées et le cas échéant, l'ensemble des données du programme de télévision initial identifiant les services offerts et/ou complétant la description d'offre de programme (EPG SysA), en y ajoutant la messagerie complémentaire de contrôle de titres d'accès (ECM SysB), la messagerie complémentaire de gestion des titres d'accès (EMM SysB) et, le cas échéant, l'ensemble complémentaire de données (EPG SysB) propres au système complémentaire d'accès conditionnel (SysB).

3. Equipement selon la revendication 2, **caractérisé par le fait que** les moyens (102A) contenant les droits d'accès correspondant au premier système d'accès conditionnel (SysA) et les moyens (102B, 114) aptes à prendre en compte les conditions du système d'accès conditionnel complémentaire (SysB) sont chacun constitués par une carte à processeur de sécurité.

## Patentansprüche

1. Verfahren zum Zuweisen eines komplementären bedingten Zugangs zu einem Fernsehprogramm, das bereits einen bedingten Zugang besitzt, wobei dieses Fernsehprogramm anfänglich umfaßt:
- Video- und/oder Ton- und/oder Datenkomponenten, die gemäß einem ersten System zum bedingten Zugang (SysA) verrauscht sind, wobei die Verrauschoperation kryptographische Behandlungen unter Verwendung von Kontrollworten (CW) einsetzt,
- ein Nachrichtensystem zur Kontrolle von Zugangsrechten (ECM SysA), die Bedingungen zur Vermarktung des Programms ausdrücken,
- ein Nachrichtensystem zur Verwaltung der Zugangsrechte (EMM SysA), gebildet aus Daten, die die Verwaltung der von einem Benutzer erworbenen Rechte sicherstellen,
- gegebenenfalls eine Gruppe von Daten, die die angebotenen Dienste (PSI, SI) identifizieren, und/oder die Beschreibung des Programmangebots vervollständigen (EPG SysA),
**dadurch gekennzeichnet, daß**:
- man dieses Programm in einer Einrichtung empfängt, die die Zugangsrechte entsprechend dem ersten System zum bedingten Zugang (SysA) enthält,
- man die Kontrollworte (CW) wiederherstellt, die dem Verrauschen gedient haben,
- man ausgehend von diesen wiederhergestellten Kontrollworten (CW) Nachrichten zur Kontrolle von komplementären Zugangsrechten (ECM SysB) unter Berücksichtigung der Bedingungen des System zum komplementären bedingten Zugang (SysB) berechnet und man ein komplementäres Nachrichtensystem zur Kontrolle von Zugangsrechten (ECM SysB) erstellt,
- man ein komplementäres Nachrichtensystem zur Verwaltung von Zugangsrechten (EMM SysB) produziert, das dem System zum komplementären bedingten Zugang (SysB) eigen ist, und gegebenenfalls eine komplementäre Gesamtheit (EPG SysB), die die Dienste identifiziert, welche im System zum komplementären bedingten Zugang (SysB) angeboten werden,
- man das Programm wieder aussendet, und zwar mit seinen unveränderten Komponenten und seinem unveränderten Nachrichtensystem zur Kontrolle von Zugangsrechten (ECM SysA) und seinem unveränderten Nachrichtensystem zur Verwaltung der Zugangsrechte (EMM SysA), sowie gegebenenfalls die Gesamtheit der anfänglichen Fernsehprogrammdaten, die die angebotenen Dienste identifizieren und/oder die Beschreibung des Programmangebots (EPG SysA) vervollständigen, und daß man das komplementäre Nachrichtensystem zur Kontrolle von Zugangsrechten (ECM SysB) hinzufügt, das komplementäre Nachrichtensystem zur Verwaltung der Zugangsrechte (EMM SysB) sowie gegebenenfalls die komplementäre Gesamtheit von Daten (EPG SysB), die dem komplementären System zum bedingten Zugang (SysB) eigen sind.

2. Gerät zum Zuweisen eines komplementären bedingten Zugangs zu einem Fernsehprogramm, das bereits einen bedingten Zugang besitzt, gemäß dem Verfahren nach Anspruch 1, **dadurch gekennzeichnet, daß** es umfaßt:
- eine Einrichtung (102A), die die Zugangsrechte entsprechend dem ersten System zum bedingten Zugang (SysA) enthält,
- eine Einrichtung (112), die dazu ausgelegt ist, die Kontrollworte (CW) wiederherzustellen, die dem Verrauschen gedient haben,
- eine Einrichtung (102B, 114), um ausgehend von diesen wiederhergestellten Kontrollworten (CW) komplementäre Nachrichten zur Kontrolle von Zugangsrechten (ECM SysB) unter Berücksichtigung der Bedingungen des Systems zum komplementären bedingten Zugang (SysB) zu berechnen, wobei man ein komplementäres Nachrichtensystem zur Kontrolle von Zugangsrechten (ECM SysB) erstellt,
- eine Einrichtung (106) zum Erzeugen eines komplementären Nachrichtensystems zur Verwaltung von Zugangsrechten (EMM SysB), die dem System zum komplementären bedingten Zugang (SysB) eigen sind, und gegebenenfalls eine komplementäre Gesamtheit (EPG SysB), die die Dienste identifiziert, welche im System zum komplementären bedingten Zugang (SysB) angeboten werden,
wobei es dieses Gerät erlaubt, daß man das Programm wieder aussendet, und zwar mit seinen unveränderten Komponenten, seinem unveränderten Nachrichtensystem zur Kontrolle von Zugangsrechten (ECM SysA) und seinem unveränderten Nachrichtensystem zur Verwaltung der Zugangsrechte (EMM SysA), sowie gegebenenfalls die Gesamtheit der anfänglichen Fernsehprogrammdaten, die die angebotenen Dienste identifizieren und/oder die Beschreibung des Programmangebots (EPG SysA) vervollständigen, wobei man das komplementäre Nachrichtensystem zur Kontrolle von Zugangsrechten (ECM SysB) hinzufügt, das komplementäre Nachrichtensystem zur Verwaltung der Zugangsrechte (EMM SysB) sowie gegebenenfalls die komplementäre Gesamtheit von Daten (EPG SysB), die dem komplementären System zum bedingten Zugang (SysB) eigen sind.

3. Gerät nach Anspruch 2, **dadurch gekennzeichnet, daß** die Einrichtung (102A), die die Zugangsrechte entsprechend dem ersten System zum bedingten Zugang (SysA) enthält, sowie die Einrichtung (102B, 114), die dazu ausgelegt ist, die Bedingungen des Systems zum komplementären bedingten Zugang (SysB) zu berücksichtigen, jeweils durch eine Sicherheitsprozessorkarte gebildet sind.

## Claims

1. Process for assigning a complementary conditional access to a television program already in conditional access, this television program initially comprising:
- video and/or sound and/or data components, scrambled according to a first conditional access system (SysA), the scrambling operation making use of cryptographic processing using control words (CW),
- entitlement control messages (SysA ECM) expressing the conditions for marketing the program,
- entitlement management messages (SysA EMM) composed of data managing entitlements acquired by the user, and
- possibly a set of data identifying services offered (PSI, SI) and/or extending the description of the program offer (EPG SysA),
**characterized by** the fact that:
- this program is received in means containing access entitlements corresponding to the first conditional access system (SysA),
- the control words (CW) used for scrambling are reproduced,
- complementary entitlement control messages (SysB ECM) are calculated starting from these reproduced control words (CW), taking account of the conditions of the complementary conditional access system (SysB), and complementary entitlement control messages are built up (SysB ECM),
- complementary entitlement management messages (SysB EMM) are produced specific to the complementary conditional access system (SysB), possibly together with a complementary set (SysB EPG) identifying services offered in the complementary conditional access system,
- the program is rebroadcast with its components unchanged, its entitlement control messages (SysA ECM) and its entitlement management messages (SysA EMM) unchanged, and possibly all initial television program data identifying offered services and/or adding to the description of offered programs (EPG SysA) and complementary entitlement control messages (SysB ECM), complementary entitlement management messages (SysB EMM), and possibly the set of complementary data (SysB EPG) specific to the complementary conditional access system (SysB), are added.

2. Equipment for assigning a complementary conditional access to a television program already in conditional access according to the process in claim 1, **characterized by** the fact that it comprises:
- means (102A) containing access entitlements corresponding to the first conditional access system (SysA),
- means (112) capable of reproducing the control words (CW) used for scrambling,
- means (102B, 114) for calculating complementary entitlement control messages (SysB ECM) starting from these reproduced control words (CW), taking account of the conditions of the complementary conditional access system (SysB), and complementary entitlement control messages (SysB ECM) are built up,
- means (106) of producing complementary entitlement management messages (SysB EMM) specific to the complementary conditional access system (SysB), and possibly a complementary set (SysB EPG) identifying services offered in the complementary conditional access system (SysB),
this equipment being used to rebroadcast the program with its components unchanged, its entitlement control messages (SysA ECM), and its entitlement management messages (SysA EMM) unchanged and, if applicable, all data for the initial television program identifying services offered and/or additional to the program offer description (EPG SysA) by adding the complementary entitlement control messages (SysB ECM), the complementary entitlement management messages (SysB EMM), and if applicable, the complementary set of data (SysB EPG) specific to the complementary conditional access system (SysB).

3. Equipment according to claim 2, **characterized by** the fact that the means (102A) containing the access entitlements corresponding to the first conditional access system (SysA) and the means (102B, 114) for taking account of the complementary conditional access system (SysB) are each produced by a security processor.
